# EUROPÄISCHE PATENTSCHRIFT

(11) **EP 1 839 480 B1**
(45) Veröffentlichungstag und Bekanntmachung des Hinweises auf die Patenterteilung: **05.11.2008**
(21) Anmeldenummer: 07006236.9
(22) Anmeldetag: 27.03.2007
(51) Int. Cl.: A01D 78/10

(54) **Kreiselschwader**
Rotary windrower
Andaineuse rotative

(30) Priorität: 28.03.2006 DE 102006014652; 07.09.2006 DE 102006042552
(43) Veröffentlichungstag der Anmeldung: 03.10.2007
(73) Patentinhaber: CLAAS Saulgau GmbH, 88348 Bad Saulgau (DE)
(72) Erfinder: Altepost, Helmut, 48477 Hörstel-Riesenbeck (DE)
(74) Vertreter: Eisele, Otten, Roth & Dobler

(56) Entgegenhaltungen:
- EP-A1- 0 753 247
- EP-A1- 0 951 818
- DE-A1- 10 327 915

## Beschreibung

Die Erfindung bezieht sich auf eine Kreiselschwader nach dem Oberbegriff des Anspruchs 1.

### Stand der Technik

In der DE 103 27 915 ist ein Kreiselschwader mit wenigstens drei Staffelreihen bildenden Schwadkreiseln beschrieben, wobei diese in der Arbeits- und Betriebsstellung in Fahrtrichtung im Wesentlichen V-förmig ausgerichtet sind, wobei die Schwadkreisel in Maschinenfahrtrichtung und entgegen der Maschinefahrtrichtung translatorisch beweglich an einem Maschinengestell abstützbar sind. Dabei sind die Schwadkreisel in ihrer Arbeits- und Betriebsstellung an schräg zu einem zentralen Zugbalken ausgerichteten Auslegern abgestützt, die jeweils scherenartig in eine Transportstellung an den zentralen Zugbalken heranschwenkbar sind. Nachteilig dabei ist, dass der Fahrer zur Beobachtung des Gespanns seine Blickrichtung in Fahrtrichtung nicht nur nach vorn, sondern auch häufig nach hinten wenden muss.

Diesen Mangel versucht die DE 103 27 916 dadurch zu beheben, dass diese einen selbstfahrenden Kreiselschwader ebenfalls mit drei Staffelreihen in V-förmiger Anordnung vorschlägt. Dabei ist die erste Staffelreihe und damit die vorderen Schwadkreisel frontseitig an längenveränderbaren Auslegern, deren Verlauf nach außen und gleichzeitig nach hinten gerichtet ist, an dem Trägerfahrzeug angebracht, so dass die Schwadkreisel in Ihrer Arbeitsstellung etwa auf der Höhe der Fahrerkabine liegen. Die zweite Staffelreihe befindet sich im Zwischenachsbauraum des Trägerfahrzeugs und die dritte Staffelreihe am Heck des Trägerfahrzeugs. Alle Schwadkreisel sind an seitlich ausladenden Auslegern befestigt, die in der Transportfahrt für den Straßentransport hochgeklappt werden. Nachteilig an diesem Konzept ist der große technische Aufwand und die damit einhergehenden hohen Investitionskosten, die eine selbstfahrende Arbeitsmaschine, in diesem Fall ein Kreiselschwader, für den Betreiber verursachen würde.

Darüber hinaus sind bereits Kreiselschwader mit vier Kreiselrechen handelsüblich, die in Arbeitsstellung im Wesentlichen V-förmig nach vorne offen angeordnet sind. Hierbei werden beispielsweise die Kreiselrechen an längenveränderbaren Auslegern angeordnet. Entsprechende Vierfach-Kreiselschwader sind jedoch im Allgemeinen als anhängende Arbeitsmaschinen für einen Traktor ausgebildet.

Weiterhin sind bereits Kreiselschwader bzw. Heuwerbungsmaschinen gemäß der DE 200 04 538 U1 bekannt, wobei diese drei Kreiselrechen umfassen, die an einem Tragarm angeordnet sind, der um eine Schwenkachse verschwenkt werden kann. Hierbei handelt es sich um einen an einen Schlepper anhängbaren Kreiselschwader, wobei der Tragarm mit den Kreiselrechen in der Transportstellung längs der Fahrtrichtung ausgerichtet ist und wobei die Drehachse, in Fahrtrichtung betrachtet, vor dem Tragarm vorhanden ist. In der Arbeitsstellung wird der Tragarm derart um die Schwenkachse verschwenkt, dass dieser spitzwinklig zur Transportstellung und nach hinten gerichtet ausgerichtet ist. Hierdurch sind die Kreiselrechen jeweils seitlich versetzt hintereinander angeordnet, um entsprechend Erntegut zusammenzurechen. Demzufolge handelt es sich hierbei um einen gezogenen Kreiselschwader, der den Schwad seitlich ablegt.

Durch entsprechend gegenläufiges Überfahren des Feldes kann das Erntegut von insgesamt sechs Kreiselrechen zu einem einzigen Schwad zusammengerecht werden.

Nachteilig hierbei ist jedoch, dass für eine große Arbeitsbreite, wobei mindestens sechs Kreiselrechenbreiten zu einem Schwad zusammengelegt werden, das entsprechende Feld zweimal überfahren wird. Dies ist einerseits zeitaufwändig und zudem unwirtschaftlich. Eine Verlängerung des Tragarmes zur Aufnahme von vier oder mehr Kreiselrechen ist in der Transportstellung bzw. im Straßenverkehr nicht handzuhaben.

Darüber hinaus sind aus den Druckschriften EP 0 951 818 A1 sowie EP 0 753 247 A1 bereits Heuwender bekannt, die in der Transportstellung mit einem nach vorne in Fahrtrichtung ausgerichteten Tragarm mit Arbeitswerkzeugen zeigen. Diese Heuwender werden im Allgemeinen im Betrieb mit senkrecht zur Fahrtrichtung ausgerichteten Tragarmen betrieben, wobei vereinzelt auch eine Sonderstellung der Tragarme möglich ist, bei der die Tragarme etwas nach hinten verschwenkt sind.

Aus dem dargelegten Stand der Technik wird deutlich; dass derzeit kein Konzept für Kreiselschwader vorhanden ist, das sowohl für kleinere bzw. mittlere Kreiselschwader mit zwei bis vier Kreiselrechen sich wirtschaftlich auch auf einen Großschwader mit mindestens sechs Kreiselrechen übertragen lässt und sowohl in der Arbeitsstellung als auch in der Transportstellung gut handzuhaben ist.

### Aufgabenstellung

Die Aufgabe der Erfindung ist es daher, einen gut handhabbaren Kreiselschwader, insbesondere Mittelschwader mit großer Arbeitsbreite, sowohl in der Arbeits- als auch in der Transportstellung mit wesentlich verbesserten wirtschaftlichen Eigenschaften vorzuschlagen.

### Lösung der Aufgabe

Gelöst wird die Aufgabe der Erfindung mit den Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Dementsprechend zeichnet sich ein erfindungsgemäßer Kreiselschwader dadurch aus, dass in der Arbeitsstellung in Fahrtrichtung betrachtet der hintere Endabschnitt des verstellbaren Tragrahmens vor dem vorderen Endabschnitt des verstellbaren Tragrahmens angeordnet ist und dass in der Transportstellung der verstellbare Tragrahmen in Fahrtrichtung betrachtet hinter der Drehachse des Tragrahmens und dass in der Arbeitsstellung der verstellbare Tragrahmen in Fahrtrichtung betrachtet vor der Drehachse des Tragrahmens angeordnet ist. Dies bedeutet, dass der Tragrahmen in Transportstellung wenigstens teilweise nach hinten bzw. hinter und in Arbeitsstellung wenigstens teilweise nach vorne bzw. vor der Drehachse angeordnet ist. Hierdurch ist der Tragrahmen im Allgemeinen deutlich weiter verstellbar bzw. verschwenkbar als dies bislang der Fall war.

Neben dem Verschwenken des Tragrahmens um ein reelle oder auch virtuelle Drehachse sind auch andere Verstellmöglichkeiten gemäß der Erfindung denkbar, wie z.B. verstellen längs einer vorteilhaften Führungsbahn oder dergleichen.

Die Erfindung führt zu einem besonders einfachen Konstruktionsprinzip, bei dem der Kreiselschwader sowohl in der Arbeits- als auch in der Transportstellung sehr gut handzuhaben und zugleich wirtschaftlich günstig herstellbar und betreibbar ist, insbesondere auch bei einem Kreiselschwader mit großer Arbeitsbreite.

Besonders wirtschaftlich hierbei ist vor allem, dass beispielsweise am Tragrahmen bzw. -arm zwei oder mehr Kreiselrechen angeordnet werden können, so dass hierdurch bereits eine einfache Variation der Arbeitsbreite lediglich dadurch stattfinden kann, dass der Tragrahmen in vorteilhafter Weise unterschiedlich lang ausgebildet werden kann. Entsprechende weitere Komponenten, beispielsweise Mittel zur Fixierung der Kreiselrechen am Tragrahmen und/oder die Verstellmechanik und/oder Steuerung des Tragrahmens und/oder der Kreiselrechen können beibehalten werden. Entsprechend vereinfacht und zugleich wirtschaftlich verbessert wird die Herstellung entsprechender unterschiedlicher Kreiselschwader.

Darüber hinaus kann auch durch die Verwendung mehrerer Tragrahmen gemäß der Erfindung eine zusätzliche Flexibilität bezüglich der Arbeitsbreite erreicht werden. Gerade bei der Verwendung mehrerer Tragrahmen gemäß der Erfindung können entsprechende Komponenten doppelt oder dreifach etc. eingesetzt werden, was eine besonders wirtschaftliche Herstellung und/oder Steuerung dieser ermöglicht.

Vorzugsweise ist in der Transportstellung die Längsachse des Tragrahmens im Wesentlichen in Fahrtrichtung ausgerichtet. Somit wird gewährleistet, dass der Kreiselschwader besonders gut im Verkehr bzw. in der Transportstellung handzuhaben ist. Mit einer derartigen weitgehend parallelen zur Fahrbahn bzw. Fahrtrichtung ausgerichteten Anordnung des Tragrahmens weist der Kreiselschwader in Transportstellung eine besonders geringe Breite auf. Gegebenenfalls sind die Kreiselrechen horizontal, d.h. deren Drehachse im Wesentlichen vertikal ausgerichtet, so dass beispielsweise bei der Verwendung eines einzigen Tragrahmens die Breite des Kreiselschwaders im Wesentlichen durch die Breite der Kreiselrechen definiert ist. Dies ist bei derzeit üblichen Kreiselrechen durchaus tolerabel.

In einer besonderen Weiterbildung der Erfindung ist der Schwenkwinkel im Wesentlichen größer als 90° und kleiner als 170°. Dies ist insbesondere in dem Fall von besonderem Vorteil, bei dem die Längsachse des Tragrahmens in der Transportstellung etwa bzw. im Wesentlichen in Fahrtrichtung ausgerichtet ist. Entsprechend wird hierbei ein stumpfwinkliger Schwenkwinkel realisiert. Dies steht im krassen Gegensatz zu den sehr spitzen Schwenkwinkeln gemäß dem Stand der Technik.

Vorzugsweise ist der Schwenkwinkel des Tragrahmens in der Arbeitsstellung steuerbar veränderbar, so dass beispielsweise eine Anpassung bei Kurvenfahrt realisiert wird. Hierdurch wird der Überdeckungsbereich der entsprechend hintereinander angeordneten Kreiselrechen sowohl in Geradeausfahrt als auch in Kurvenfahrt möglichst optimal realisierbar. Dementsprechend optimal wird das Erntegut auf dem Feld zusammenrechenbar.

Vorteilhafterweise ist der Schwenkwinkel, insbesondere bei in der Transportstellung im Wesentlichen in Fahrtrichtung ausgerichteter Längsachse des Tragrahmens, zwischen 125° und 150°. Es hat sich gezeigt, dass ein derartiger Schwenkwinkel von besonderem Vorteil ist.

In einer vorteilhaften Variante der Erfindung ist in der Arbeitsstellung die Längsachse des Tragrahmens in Bezug zur Fahrtrichtung und einem Arbeitswinkel im Wesentlichen zwischen 10° und 80°, vorzugsweise zwischen 30° und 60°, ausgerichtet. Auch gemäß dieser Variante ist das Zusammenrechen von Erntegut auf dem Feld besonders vorteilhaft zu realisieren.

Grundsätzlich kann der Schwenkwinkel auch kleiner als 90° ausgebildet werden, wobei gemäß der Erfindung die Längsachse des Tragrahmens in der Transportstellung schräg bzw. spitzwinklig auszurichten ist. Dies kann beispielsweise bei der Verwendung eines einzigen Tragrahmens von Vorteil sein, der z.B. eine Schwenkachse aufweist, die nicht mittig, d.h. bezogen auf die Mittellängsachse eines Antriebsfahrzeugs, seitlich versetzt angeordnet ist. In einer derartigen Variante kann es von Vorteil sein, den Tragrahmen spitzwinklig in der Transportstellung bezogen auf die Fahrtrichtung anzuordnen, wobei in Transportstellung die Drehachse beispielsweise im Wesentlichen an der äußersten Seite und das freie Ende des Tragrahmens das entgegengesetzte, äußerste Ende des Kreiselschwaders bildet. Dementsprechend definiert der Tragrahmen im Wesentlichen die Breite des Kreiselschwaders in Transportstellung.

Bei der Verwendung eines einzigen Tragrahmens gemäß der Erfindung kann der Kreiselschwader den Schwad im Allgemeinen lediglich seitlich ablegen. Vorzugsweise sind wenigstens zwei um im Wesentlichen vertikale Drehachsen schwenkbare Tragrahmen vorgesehen. Beispielsweise mit zwei schwenkbaren Tragrahmen gemäß der Erfindung kann auch ein sogenannter Mittelschwader in vorteilhafter Weise realisiert werden, d.h. dass der Kreiselschwader den Schwad mittig ablegt. Beispielsweise ist der Kreiselschwader im Wesentlichen symmetrisch zur Mittelachse ausgebildet, so dass beispielsweise die verwendeten Komponenten jeweils zweimal einsetzbar sind. Hierdurch wird die Herstellung sowie die Betriebsweise bzw. Steuerung des Kreiselschwaders verbessert.

Darüber hinaus lässt sich eine Anordnung der Kreiselrechen in Fahrtrichtung offener V-Stellung realisieren, so dass das Handling des Kreiselschwaders vor allem im Arbeitseinsatz vorteilhaft ist.

Grundsätzlich wird gemäß der erfindungsgemäßen Anordnung des Tragrahmens, d.h. in Transportstellung hinter und in der Arbeitsstellung vor der Schwenkachse, erreicht, dass der Kreiselschwader sowohl bei der Verwendung eines einzigen als auch bei der Verwendung von zwei entsprechend schwenkbaren Tragrahmen sowohl in Transportstellung als auch in Arbeitsstellung besonders vorteilhaft handzuhaben sind. Vor allem durch das Vorschwenken in der Arbeitsstellung der Kreiselrechen wird ermöglicht, dass die Bedienperson bzw. der Fahrer des Kreiselschwaders und/oder des Traktors vergleichsweise gut den vordersten bzw. äußersten Kreiselrechen einsehen kann. Der vorderste bzw. äußerste Kreiselrechen ist im Allgemeinen der entscheidende Kreiselrechen, der einen Rand der Arbeitsbreite definiert. Bei V-förmig angeordnetem Kreiselrechen sind somit die beiden äußeren Kreiselrechen von entscheidender Bedeutung. Hierbei ist es von besonderem Vorteil, wenn diese besonders weit nach vorne gemäß der Erfindung verstellbar sind.

Vorteilhafterweise sind in der Transportstellung die beiden Längsachsen der Tragrahmen im Wesentlichen parallel nebeneinander angeordnet. Hierdurch wird gerade bei der Verwendung von zwei Tragrahmen erreicht, dass diese in der Transportstellung besonders kompakt anordenbar sind. Entsprechend gering ist die Transportbreite des Kreiselrechens, was vor allem bei der Ausführung als Großschwader von besonderem Vorteil ist.

Generell kann der Kreiselschwader gemäß der Erfindung entweder als Selbstfahrer oder als anzuhängender bzw. aufzusattelnder Kreiselschwader ausgebildet werden. Beim aufzusattelnden Kreiselschwader kann der Kreiselschwader vom Zugfahrzeug, insbesondere Traktor, in der Transportposition vollständig vom Boden abgehoben werden. Hierbei sind separate Räder für den Tragrahmen bzw. den Kreiselschwader nicht unbedingt notwendig. Es können lediglich die die Kreiselrechen abstützenden Räder vorhanden sein. Ein entsprechender Kreiselschwader wird in vorteilhafter Weise mittels den derzeit standardisierten Dreipunktkupplungen angehoben.

Vorzugsweise sind der/die Tragrahmen an einem quer zur Fahrtrichtung ausgerichteten Querrahmen angeordnet. Hierbei wird in vorteilhafter Weise die Drehachse zwischen dem Querrahmen und dem Tragrahmen angeordnet bzw. die entsprechenden Komponenten sind über die entsprechende Drehachse des Tragrahmens miteinander in vorteilhafter Weise verbunden.

Mit Hilfe eines derartigen Querrahmens ist es in vorteilhafter Weise möglich, die erfindungsgemäße Schwenkbarkeit des Tragrahmens von der Transportposition in die Arbeitsposition zu realisieren. Darüber hinaus kann der Tragrahmen gemäß der Erfindung auch während der Arbeitsposition veränderbar am Querrahmen verschwenkt werden.

Vorzugsweise ist eine Verstelleinheit vorgesehen, die einerseits am Querrahmen und andererseits am Tragrahmen angeordnet ist. Beispielsweise ist eine Zylinderkolbeneinheit, insbesondere Hydraulikzylinderkolbeneinheit, als Verstelleinheit gemäß der Erfindung vorgesehen. Hydraulikkomponenten sind bereits in der Landwirtschaft vielfach gebräuchlich, so dass entsprechende Zugfahrzeuge bzw. Komponenten mit entsprechenden hydraulischen Druckerzeugungsaggregaten, Hydraulikleitungen, Hydraulikanschlüsse etc. bereits handelsüblich sind und somit wirtschaftlich günstig zur Verfügung stehen.

Weiterhin ist denkbar, dass beispielsweise bei der Verwendung von zwei Tragrahmen gemäß der Erfindung die Verstelleinheit nicht unbedingt am Querrahmen, sondern einerseits am ersten und andererseits am zweiten Tragrahmen angeordnet bzw. fixiert ist und somit die Verstellung der beiden Tragrahmen realisierbar ist. Vorzugsweise sind jedoch bei der Verwendung von zwei Tragrahmen zwei separate Verstelleinheiten vorgesehen, die insbesondere jeweils am Querrahmen anzuordnen sind. Hierdurch wird eine stabile bzw. definierte Positionierung und/oder Veränderbarkeit des jeweiligen Tragrahmens realisierbar.

In einer vorteilhaften Variante der Erfindung ist am Querrahmen wenigstens eine Kupplungsvorrichtung zum Kuppeln des Kreiselschwaders mit der Zugmaschine angeordnet. Hierdurch wird in vorteilhafter Weise eine anzuhängende bzw. aufzusattelnde Variante der Erfindung realisierbar. Hierbei ist sowohl eine Kupplungsvorrichtung denkbar, die an eine Dreipunktkupplung heutiger Zugmaschinen, insbesondere bei Schleppern oder dergleichen, ankuppelbar ist und/oder auch eine Kupplungsvorrichtung, die als Deichsel oder dergleichen an entsprechende deichselaufnehmende Kupplungen, wie Maulkupplungen etc., von derzeitigen Zugmaschinen ankuppelbar ist.

Vorzugsweise ist wenigstens eine eine Schwenkachse aufweisende Schwenkeinheit zwischen dem Querrahmen und der Kupplungsvorrichtung vorgesehen. Eine derartige Schwenkeinheit kann in vorteilhafter Weise zum Verschwenken des Kreiselschwaders in Bezug zur Zugmaschine vor allem während der Transportstellung der/des Tragrahmen verwendet werden. Hierdurch wird die Manövrierfähigkeit eines entsprechenden Kreiselschwaders gemäß der Erfindung, vor allem in der Ausprägung als Großschwader, mit mindestens drei an einem Tragrahmen angeordneten Kreiselrechen und/oder bei zwei Tragrahmen mit jeweils mindestens drei Kreiselrechen, deutlich vereinfacht.

Bei einer Ausbildung der Kupplungsvorrichtung gemäß der Erfindung als Deichsel oder dergleichen ist eine derartige separate Schwenkeinheit nicht zwingend notwendig. Vielmehr ist im Sinn der Erfindung die Kupplungsvorrichtung als die Schwenkeinheit ausgebildet. Möglichweise kann hierbei auch auf den Querrahmen verzichtet werden bzw. ein Längsrahmen oder gegebenenfalls kein entsprechendes Zusatzrahmenelement eingesetzt werden.

Vorteilhafterweise ist wenigstens eine Arretiereinheit zum Arretieren der Schwenkeinheit vorgesehen, so dass zumindest in der Arbeitsstellung die Querausrichtung des Querrahmens in Bezug zur Zugmaschine und/oder zur Fahrtrichtung arretiert ist. Mit Hilfe einer derartigen Arretiereinheit wird gewährleistet, dass der/die Tragrahmen und somit die an diesen angeordneten Kreiselrechen eine definierte Position zur Zugmaschine bzw. zum Fahrwerk des als eventuell selbstfahrenden Kreiselschwader ausgebildeten Arbeitsaggregat angeordnet ist. Beispielsweise umfasst die Arretiereinheit wenigstens eine Kolbenzylindereinheit, insbesondere eine hydraulische Kolbenzylindereinheit, und/oder eine vorzugsweise materialschlüssige Rast- bzw. Steckeinheit. Das entsprechende Arretieren bzw. Lösen der Schwenkeinheit gemäß der Erfindung wird vorzugsweise automatisch von der Bedienperson gesteuert oder gegebenenfalls auch manuell realisiert.

Generell ist es von Vorteil, den Kreiselschwader bezüglich der entsprechenden Lenkräder zumindest während der Arbeitsphase bzw. in Arbeitsstellung fest zu fixieren, womit die Handhabung des Kreiselschwaders gemäß der Erfindung verbessert wird. Hierbei inbegriffen ist im Sinn der Erfindung auch eine definierte Veränderung des Tragrahmens bezüglich dem Schwenkwinkel und/oder in Bezug zur Zugmaschine bzw. den Lenkrädern. Hier wird auf die bereits oben erwähnte Anpassungsfähigkeit des Schwenkwinkels bzw. der Ausrichtung des Tragrahmens vor allem in der Kurvenfahrt zur Optimierung der Überdeckungsbereiche der einzelnen Kreiselrechen verwiesen.

Grundsätzlich kann in vorteilhafter Weise eine weitestgehend automatische Anpassung des Schwenkwinkels des Tragrahmens in Abhängigkeit zum Lenkwinkel der Lenkräder bzw. der Zugmaschine vorgesehen werden. Vorzugsweise wird dies mittels einer elektronischen Steuereinheit umgesetzt, was ein weitgehend optimales Zusammenrechen des Erntegutes auch in Kurvenfahrten gewährleistet.

Vorzugsweise wird die Arretiereinheit in der Transportstellung gelöst, so dass die Manövrierfähigkeit des Kreiselschwaders während des Transports bzw. in Transportposition möglichst optimal ist.

In einer besonderen Weiterbildung der Erfindung ist wenigstens einer der Schwadkreisel an einem Ausleger mit dem Tragrahmen verbunden. Vorzugsweise sind wenigstens zwei, insbesondere drei Kreiselrechen mit jeweils separaten Auslegern mit dem entsprechenden Tragrahmen verbunden. Mit Hilfe eines bzw. der Ausleger können der/die Kreiselrechen flexibel in der Transportstellung und/oder in der Arbeitsstellung in Bezug zum Tragrahmen bzw. zum Zugfahrzeug angeordnet werden. Beispielsweise ist ein Ausleger wenigstens teilweise in Fahrtrichtung und/oder ein zweiter Ausleger entgegen der Fahrtrichtung ausgerichtet. Hierdurch kann die V-förmige Anordnung, beispielsweise bei entsprechenden Kreiselschwadern, durch eine derartige Ausrichtung der Ausleger in unterschiedlichste Richtungen generiert werden. Hierbei ist von Vorteil, dass der/die Tragrahmen gemäß der Erfindung einen vergleichsweise geringen Schwenkwinkel realisieren brauchen.

Darüber hinaus kann durch einen nach vorne bzw. in Fahrtrichtung ausgerichteten Ausleger zumindest die vordersten Kreiselrechen noch etwas weiter nach vorne bzw. in Fahrtrichtung positioniert werden, so dass dieser möglichst weit vorne angeordnet ist. Hierdurch ist vor allem der vorderste Kreisel bzw. die vordersten Kreiselrechen besonders gut vom Fahrer bzw. von der Bedienperson in der Arbeitsstellung einsehbar.

Vorzugsweise sind alle Ausleger wenigstens teilweise entgegen der Fahrtrichtung ausgerichtet und/oder nach außen weisend ausgerichtet. Hierbei ist insbesondere ein vorteilhaftes Nachlaufverhalten der Kreiselrechen realisierbar bzw. wird eine vom Tragrahmen ziehende Ausbildung der Kreiselrechen realisiert.

Vorteilhafterweise ist der/die Ausleger um wenigstens eine Achse drehbar am Tragrahmen angeordnet. Vorzugsweise ist der/die Ausleger jeweils um wenigstens zwei Achsen drehbar am Tragrahmen angeordnet. Beispielsweise sind die beiden Achsen im Wesentlichen orthogonal zueinander ausgerichtet. Insbesondere ist eine Achse im Wesentlichen vertikal und/oder die andere Achse im Wesentlichen horizontal ausgerichtet. Mit Hilfe derartiger Achsen der Ausleger sind diese sowohl horizontal und/oder vertikal schwenkbar, was einerseits eine vorteilhafte Verschwenkung der Ausleger und somit der Kreiselrechen realisiert, um beispielsweise von der Arbeitsstellung in eine hochverschwenkte bzw. hochgestellte Transportstellung verstellt zu werden.

Andererseits kann durch eine im Wesentlichen vertikal ausgerichtete Achse des Auslegers zu einer Verschwenkung des Auslegers und somit Verstellung des entsprechenden Kreiselrechens in etwa horizontalen Ebene realisiert werden, wodurch in vorteilhafter Weise eine Anpassung der Arbeitsstellung des entsprechenden Kreiselrechens in vorteilhafter Weise realisierbar ist. Beispielsweise kann diese Verstellbarkeit des Auslegers zur Anpassung der Arbeitsbereiche der Kreiselrechen in Geradeausfahrt und entsprechend verstellter Position in Kurvenfahrt, insbesondere in Abhängigkeit des Kurvenradius, verwendet werden.

Darüber hinaus kann insbesondere durch die Verschwenkung des Auslegers des hintersten Kreiselrechens, vor allem bei einem V-förmig arbeitenden Kreiselschwader zu einer Veränderung der Breite des Mittelschwades bzw. des Schwades verwendet werden.

Weiterhin kann auch durch die Verschwenkbarkeit des Auslegers des vordersten Kreiselrechens die Arbeitsbreite des Kreiselschwaders gemäß der Erfindung in vorteilhafter Weise verändert werden. Dies kann insbesondere auch zur Umgehung von Hindernissen oder dergleichen eingesetzt werden.

Grundsätzlich ist es von Vorteil, einen Kreiselschwader gemäß der Erfindung, insbesondere als sogenannter Großschwader ausgebildet, mittels einem Hinderniserkennungssystem und/oder Bestandskantenerkennungssystem auszubilden, da zum Teil Arbeitsbreiten von ca. 22 m realisiert werden können. Beispielsweise kann der Kreiselschwader gemäß der Erfindung auch ein Hinderniserkennungssystem umfassen, das bereits abgespeicherte Hindernisse, wie Bäume, Bäche, Steine, bereits zuvor geortete Fremdkörper, wie abgebrochene Zinken und/oder sonstige Teile von landwirtschaftlichen Maschinen aus vorherigen Arbeitsgängen, etc. umfasst. Hiermit ist es möglich, dass beim Annähern an entsprechende, insbesondere zuvor abgespeicherte Hindernisse ein automatisches Einschwenken des Tragrahmens und/oder des Auslegers und/oder der Lenkräder realisiert wird. Dies erhöht die Betriebssicherheit entsprechender Kreiselschwader gemäß der Erfindung, was vor allem bei Großschwadern mit Arbeitsbreiten von ca. 20 m oder mehr von entscheidender Bedeutung sein kann.

Vorzugsweise ist der/die Ausleger jeweils als längenveränderbare Ausleger ausgebildet. Hiermit wird einerseits ermöglicht, dass auch durch die Längenveränderbarkeit des Auslegers eine Anpassung an die Arbeitsbreite bzw. zum Ausweichen von Hindernissen etc. verwendet werden kann. Andererseits kann durch die Längenveränderbarkeit auch eine vorteilhafte Anpassung des Auslegers an die Arbeitsstellung bzw. die Transportstellung des Kreiselrechens erfolgen.

Vorzugsweise ist der Ausleger in Arbeitsstellung im Wesentlichen vollständig ausgezogen, d.h. er hat seine maximale Länge. In Transportstellung ist dieser, insbesondere in Kombination mit den Varianten der Erfindung, bei denen die Kreiselrechen in der Transportstellung hochgeklappt sind, weitgehend eingefahren, d.h. diese weisen im Wesentlichen minimale Länge auf, so dass die Transporthöhe des Kreiselschwaders gemäß der Erfindung in Transportstellung reduzierbar ist. Hierdurch wird die Transportfähigkeit des Kreiselschwaders gemäß der Erfindung weiter verbessert.

Vorzugsweise ist in der Arbeitsstellung eine Arbeitsposition einer Bedienperson in Fahrtrichtung betrachtet im Wesentlichen auf Höhe der Achse wenigstens eines des Kreiselrechens angeordnet. Hierdurch kann die Bedienperson bzw. der Fahrer die entsprechenden Kreiselrechen besonders gut einsehen, da dieser sozusagen neben dem Kreiselrechen platziert ist. Hierdurch muss sich der Fahrer bzw. die Bedienperson nicht nach hinten umdrehen, um den äußersten bzw. relevantesten Kreiselrechen einzusehen, was beispielsweise bei Hindernissen, Bestandskanten etc. von entscheidender Bedeutung ist.

In einer bevorzugten Variante der Erfindung ist in der Arbeitsstellung die Arbeitsposition der Bedienperson in Fahrtrichtung betrachtet hinter der Achse wenigstens eines der Kreiselrechen angeordnet. Hierdurch kann die Bedienperson bzw. der Fahrer die äußersten Kreiselrechen bzw. den äußersten Kreiselrechen besonders gut einsehen, da er gegebenenfalls bereits im Blickfeld der Bedienperson erscheint. Hierdurch ist auch ein Kreiselschwader mit besonders großer Arbeitsbreite von etwa 20 m und mehr durch einen Fahrer bzw. eine Bedienperson besonders gut handzuhaben.

Gegebenenfalls ist die Bedienperson sogar hinter dem vordersten Kreiselrechen, bezogen auf die Fahrtrichtung, in der Arbeitsstellung angeordnet und/oder bereits auf Höhe des zweiten Kreiselrechens. Dementsprechend weiter wird die visuelle Überwachung bzw. Einsicht bezogen auf die Kreiselrechen verbessert.

In einer besonderen Weiterbildung sind wenigstens sechs, jeweils um im Wesentlichen vertikale Achsen umlaufend angetriebene, am Boden durch Laufräder abstützbare Kreiselrechen zum Zusammenrechen von Erntegut vorgesehen. Vorzugsweise sind diese in Arbeitsstellung im Wesentlichen V-förmig angeordnet. Es hat sich gezeigt, dass das erfindungsgemäße Konzept vor allem für entsprechende Großschwader von besonderem Vorteil ist. Derartige Großschwader mit insgesamt sechs oder mehr Kreiselrechen können gemäß der Erfindung in wirtschaftlicher Weise hergestellt und sowohl auf dem Feld bzw. in der Arbeitsphase als auch auf der Straße bzw. in Transportstellung sehr gut gehandhabt werden.

Darüber hinaus kann das erfindungsgemäße Konzept nicht nur für derartige Großschwader, sondern auch für mittlere bis kleinere Kreiselschwader eingesetzt werden, wodurch eine Standardisierung entsprechender Komponenten realisierbar ist. Hierdurch kann sowohl die Herstellung, Lagerhaltung, das Wartungs- und Reparaturwesen entscheidend vereinfacht und wirtschaftlich günstiger umgesetzt werden.

Generell kann ein Kreiselschwader mit mindestens zwei Tragrahmen als Seitenschwader ausgebildet werden. Hierbei kann in der Arbeitsstellung einer der Tragrahmen gemäß der Erfindung nach vorne ausgerichtet und der andere Tragrahmen nach hinten ausgerichtet werden. Beispielsweise wird hierdurch erreicht, dass bei einem oben genannten Sechsfach-Schwader durch zwei gegenläufige Fahrten ein Schad von insgesamt 12 Kreiselrechen zusammengerecht wird.

In einer vorteilhaften Ausführungsform weist der Tragrahmen wenigstens ein Rad zum Verfahren des Kreiselschwaders, zumindest in der Transportstellung auf. Ein derartiges Laufrad kann nicht nur in vorteilhafter Weise in der Transportstellung, sondern auch in der Arbeitsstellung zum Abstützen bzw. Verfahren des Kreiselschwaders bzw. des Tragrahmens eingesetzt werden. Mit Hilfe einer derartigen am Boden mitlaufend ausgebildeten Stütze kann der Tragrahmen vergleichsweise leicht bzw. statisch günstig realisiert werden, was wiederum eine wirtschaftlich günstige Herstellung bedeutet.

Darüber hinaus ist denkbar, dass bei einem Kreiselschwader gemäß dem Oberbegriff des Anspruchs 1 und zur Lösung der oben genannten Aufgabe ein Rad des Tragrahmens bzw. bei Verwendung von mindestens zwei Tragrahmen mit jeweils einem entsprechenden Laufrad es von Vorteil sein kann, das/die Räder des Tragrahmens mit einem Antrieb, insbesondere einem Direktantrieb, auszubilden. Hiermit können Hebelkräfte des Tragrahmens bezüglich der Drehachse und/oder bezüglich der Schwenk- und/oder Arretiereinheiten reduziert bzw. verbessert werden. Beispielsweise sind direkt angetriebene elektrische Torquemotoren oder direkt angetriebene Hydraulikmotoren denkbar. Auch kann hierdurch das Verschwenken der/des Tragrahmens unterstützt bzw. generiert werden.

Darüber hinaus ist auch denkbar, das/die Räder des Tragrahmens lenkbar bzw. steuerbar auszubilden, so dass die Kurvenfahrt sowohl in Arbeitsstellung als auch in Transportstellung verbessert werden kann.

Gemäß der Erfindung kann ein Mittelschwader der eingangs beschriebenen Art realisiert werden, der z.B. als aufgesattelter Schwader in Verbindung mit einem Trägerfahrzeug in der Arbeitsstellung und in dessen Betriebsverhalten im Wesentlichen die gleichen Eigenschaften, wie ein selbstfahrender Kreiselschwader, und wobei dieser in der Transportstellung die gleichen Eigenschaften wie ein angehängter Kreiselschwader aufweist.

In besonders vorteilhafter Ausführung kann der Kreiselschwader mit einem Traktor oder dergleichen kombiniert werden, so dass der Traktor als Universalmaschine der Landtechnik und der Kreiselschwader im gekoppelten Zustand als Einheit im Wesentlichen die gleichen Eigenschaften und Vorteile eines selbstfahrenden Kreiselschwaders aufweisen.

Der erfindungsgemäße Kreiselschwader ist vorzugsweise am Heck des Traktors angehängt und/oder aufgesattelt und er kann vorteilhaft, z.B. in den unteren Kupplungspunkten der Unterlenker der Dreipunkthydraulikkopplung, aufgenommen werden. Dabei ist der Schwadkreisel aufnehmende Maschinenrahmen im Wesentlichen zweiteilig als Tragrahmen bzw. Schwenkflügelrahmen ausgebildet, wobei die Tragrahmen bzw. Schwenkflügel um vertikale Schwenkachsen von der Transportstellung in die Arbeitsstellung und umgekehrt verschwenkt werden. Hierbei liegen die Schwenkachsen gemäß der Erfindung in der Arbeitsstellung in Bezug auf die Fahrtrichtung hinter und in Bezug auf die Transportstellung vor den Schwenkflügel aufnehmenden Schwadkreiseln.

Vorteilhafterweise stützt sich jeder Schwenkflügel sowohl in der Arbeitsstellung als auch in der Transportstellung auf je wenigstens einem Stützrad gegenüber dem Boden ab.

In der Arbeitsstellung sind die Schwenkflügelrahmen in Ihrer Lage relativ zum Trägerfahrzeug in vorteilhafter Weise arretiert, wohin gegen sie in der Transportstellung um die Schwenkachsen frei beweglich sein können und wodurch das Nachlaufverhalten des aufgesattelten Kreiselschwaders in Kurvenfahrten in Bezug aus die Spurtreue gegenüber dem Trägerfahrzeug günstig gestaltet werden kann.

Vorzugsweise sind die Schwenkflügelrahmen um vertikale Schwenkachsen, die in Schwenklagern am vorderen Ende des deichselbildenden Längsträgers des Fahrgestells angelenkt sind, horizontal verschwenkbar.

Die Anlenkung der Schwadkreisel an diese Schwenkflügelrahmen erfolgt vorzugsweise mit Auslegern, deren Längserstreckung sich in der Arbeitsstellung im Wesentlichen entgegen der Fahrtrichtung erstreckt. Beispielsweise sind die Ausleger in Scharniergelenken mit dem Schwenkflügelrahmen verbunden, so dass diese um diese Scharniergelenkachsen relativ zum Schwenkflügelrahmen verschwenkt werden können.

Als weiterer erfinderischer Vorteil kann die Arbeitsbreite z.B. durch Veränderung des Schwenkwinkels der Schwenkflügelrahmen in Bezug auf die vertikale Längsmittelebene variiert bzw. verändert werden.

Diese Ausgestaltung beinhaltet weitere Vorteile, wie etwa die Möglichkeit des Nachsteuerns der Überdeckung der Schwadkreisel in Kurvenfahrten, der Variation der Arbeitsbreite des Kreiselrechens und/oder der Schwadbreite des zusammengerechten Schwads oder auch beispielsweise die Möglichkeit von Ausweichmanövern bei Hindernissen an den Rändern des zu bearbeitenden Rechstreifens, ohne dass dabei die Spur des Antriebfahrzeugs in Ihrer Fahrtrichtung verändert werden müsste.

In einer weiteren vorteilhaften Ausgestaltung der Erfindung sind die Ausleger längenveränderbar, beispielsweise teleskopierbar ausgestaltet. Dieses ermöglicht in vorteilhafter Weise eine Querverrückung der Schwadkreisel relativ zu den Schwenkflügelrahmen, welches z.B. eine niedrigere Transporthöhe durch Absenkung der Schwadkreisel ermöglicht.

Die erfindungsgemäße Art der Ausgestaltung des Kreiselschwaders ermöglicht es z.B., dass die Schwenkflügelrahmen in ihrer Betriebs- bzw. Arbeitsstellung eine in Fahrtrichtung V-förmige offene Anordnung zueinander haben, wohingegen diese zur Verbringung der Schwadkreisel in die Transportstellung wieder zurück geschwenkt werden, so dass die Schwenkflügelrahmen in der Transportstellung vorzugsweise nebeneinander liegend etwa parallel zueinander verlaufend ausgerichtet sind.

Bevor die Schwenkflügelrahmen in ihre endgültige Transportstellung verbracht werden, werden die Schwadkreisel z.B. um (Scharnier-)Achsen von (Scharnier-)Gelenken der Ausleger so verschwenkt, dass die Ausleger etwa lotrecht zu den Schwenkflügelrahmen ausgerichtet sind, wonach die Schwadkreisel dann in eine etwa aufrechte Ebene hinein verklappt werden.

Danach werden die Schwenkflügelrahmen in vorteilhafter Weise in ihre endgültige Transportposition hinein geschwenkt. Diese Art der Überführung der Schwadkreisel in die Transportposition hinein hat zudem den Vorteil, dass die Zinkenspitzen der Schwadkreisel so zueinander stehen, dass diese aufeinander zuweisen und somit im Inneren des zusammengeklappten Kreiselschwaders untergebracht sind, wodurch sie ein geringeres Gefährdungspotential für die Teilnahme am öffentlichen Straßenverkehr darstellen und vorzugsweise wenigstens teilweise überlappend angeordnet sind.

Die Stützräder der Schwenkflügelrahmen sind vorteilhaft als Nachlaufräder ausgeführt, so dass diese in Kurvenfahrten sich selbsttätig auf die Abrollverhältnisse in Kurvenradien einstellen können.

Nähere Einzelheiten der Erfindung sind den nachfolgenden Figurendarstellungen und deren Beschreibungen zu entnehmen.

### Ausführungsbeispiel

Es zeigen:
- Figur 1: zeigt ein Ausführungsbeispiel der Erfindung schematisch dargestellt am Beispiel eines angebauten Kreiselschwaders in einer Draufsicht,
- Figur 2: zeigt ein Ausführungsbeispiel der Erfindung schematisch dargestellt am Beispiel eines angebauten Kreiselschwaders in einer veränderten Konfiguration gegenüber der Figur 1 mit etwa der gleichen Arbeitsbreite,
- Figur 3: zeigt ein Ausführungsbeispiel der Erfindung schematisch dargestellt am Beispiel eines angebauten Kreiselschwaders in einer veränderten Konfiguration gegenüber der Fig.1 und Fig.2 mit etwa gleichen Arbeitsbreite beispielsweise in einer Kurvenfahrt,
- Figur 4: zeigt den Kreiselschwader gemäß Fig.1 schematisch in einer Zwischenstellung zur Überführung in die Transportstellung,
- Figur 5: zeigt den Kreiselschwader gemäß Fig.1 schematisch in der Draufsicht in einer Transportstellung, wobei die Ausgangstellung gemäß Fig.1 punktiert dargestellt ist,
- Figur 6: zeigt den Kreiselschwader gemäß Fig.1 schematisch in der Draufsicht in der zusammengeklappten Transportstellung in einer Kurvenfahrt,
- Figur 7: zeigt schematisch einen Kreiselschwader mit insgesamt vier Kreiselrechen, die an zwei Tragrahmen angeordnet sind,
- Figur 8: zeigt schematisch einen dritten Kreiselschwader mit drei Kreiselrechen, die an einem einzigen Tragrahmen angeordnet sind und
- Figur 9: zeigt schematisch einen vierten Kreiselschwader gemäß der Erfindung mit sechs V-förmig angeordneten Kreiselrechen, die an insgesamt zwei Tragrahmen angeordnet sind, wobei eine Verstelleinheit der Tragrahmen vorne an einer Zugmaschine in der Arbeitsstellung fixiert sind.

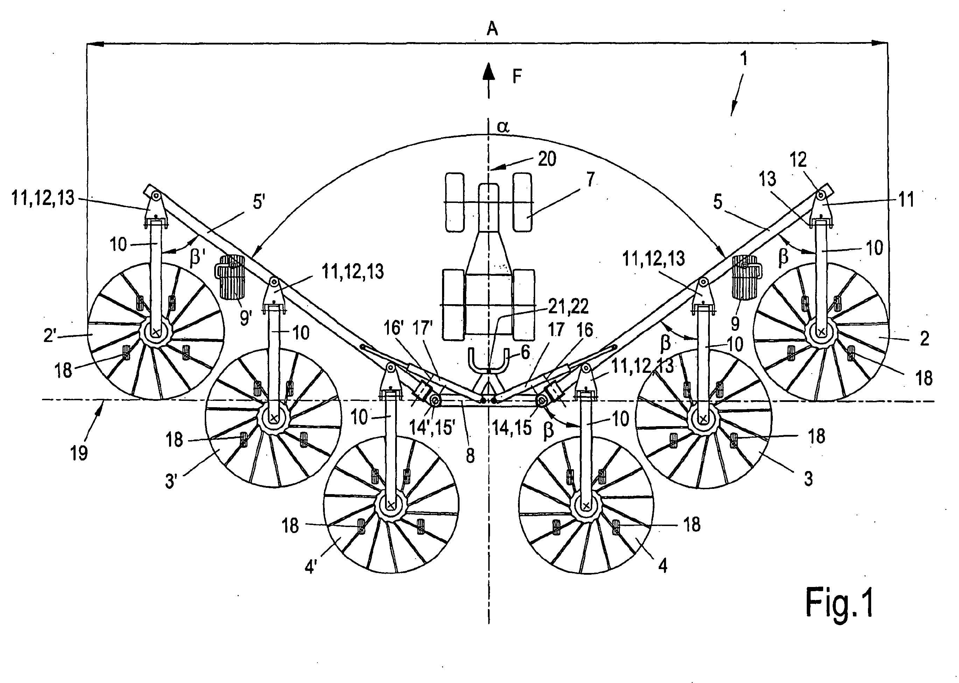

Der Kreiselschwader 1 gemäß Figur 1 ist als Mittelschwader mit sechs Schwadkreiseln 2,2',3,3',4,4', die in drei Staffelreihen V-förmig zueinander angeordnet sind, beispielhaft ausgeführt. Die Arbeits- bzw. Fahrtrichtung F ist durch einen Fahrtrichtungspfeil gekennzeichnet. Der Kreiselschwader 1 ist mittels einer Kupplungseinrichtung 6 an ein Trägerfahrzeug 7, beispielsweise ein Traktor, angebaut, wobei die Kupplungsverbindung auch die Energieversorgung wie Zapfwelle, Hydraulik, und auch Elektrik und ggf. auch die BUS-Verbindung (z.B. ISO-BUS) mit einschließen kann.

An die Kupplungseinrichtung 6 angeschlossen ist ein Mittelrahmen 8, der sich im Wesentlichen quer zur Fahrtrichtung F erstreckt, und an dem außenseitig in Klappgelenken 14,14' um deren Hochachsen 15,15' verschwenkbar Tragrahmen bzw. Schwenkflügelrahmen 5,5' angeschlossen sind. Die horizontalen Schwenkachsen 16,16' der Klappgelenke 14,14', die zugleich als Kreuzgelenke ausgebildet sind, dienen dazu, dass sich die Schwenkflügelrahmen 5,5' unabhängig voneinander und unabhängig vom Trägerfahrzeug 7 dem Bodenrelief während des Überfahrens anpassen können. Jeder Schwenkflügelrahmen 5,5' weist ein Stütz- und Nachlaufrad 9,9' auf, auf dem sich diese gegenüber dem Boden abstützen.

Vorzugsweise ist die Kupplungseinrichtung 6 an den Unterlenkern des Traktors 7 angeschlossen. Der Antrieb des Kreiselschwaders kann ebenfalls vorzugsweise durch die Zapfwellen des Traktors erfolgen oder alternativ auch durch andere Energieumwandler eines Trägerfahrzeugs 1, wie beispielsweise einer Bordhydraulik erfolgen. Rechzinken der umlaufenden Schwadkreisel 2,2',3,3',4,4' werden in bekannter Weise von einer Kurvenbahn gesteuert, wobei die Schwadkreisel von einem Kreiselfahrwerk 18, welche in verschiedensten Ausführungen dem Fachmann bekannt sind, gegenüber dem Boden abgestützt sind.

Jeder der Schwadkreisel 2,2',3,3',4,4' ist gemäß der Variante aus Figur 1 mittels eines Auslegers 10 und einem Klappgelenk 11, welches als Kreuzgelenk mit einer vertikalen Gelenkachse 12 und einer horizontalen Gelenkachse 13 ausgebildet ist, mit einem der beiden Schwenkflügelrahmen 5,5' verbunden. Vorteilhafterweise sind die Schwadkreisel 2,2',3,3',4,4' in an sich bekannter Weise kardanisch beweglich an den Auslegern 10 angeschlossen, so dass die Schwadkreisel 2,2',3,3',4,4' dadurch unabhängig voneinander und auch unabhängig von den Höhenbewegungen des Maschinenrahmens des Kreiselschwaders 1 sich dem Bodenrelief beim Überfahren momentan anpassen können.

Der jeweilige Anschlusspunkt der Ausleger 10 der Schwadkreisel 2,2',3,3',4,4' an den jeweiligen Schwenkflügelrahmen 5,5' ist z.B. ausgebildet als Klapp- bzw. Kreuzgelenk 11. Diese Ausgestaltung ermöglicht es den Auslegern 10 bzw. den Schwadkreisel 2,2',3,3',4,4', dass diese einerseits um die vertikale Schwenkachse des Kreuzgelenks 11 in der horizontalen Arbeitsebene und andererseits um die horizontale Gelenk- bzw. Schwenkachse 13 des Kreuzgelenks 11 nach oben in eine Transportstellung verklappt werden können. Dieses ist einerseits aus Transportgründen vorteilhaft, damit die Schwadkreisel 2,2',3,3',4,4' in der hochgeklappten Transportstellung eine Ausrichtung parallel zur Fahrtrichtung F einnehmen können und andererseits in der Arbeitsstellung ebenfalls auf die Fahrtrichtung F entsprechend ausgerichtet werden können, welches durch die Anstellwinkel β,β' gekennzeichnet ist.

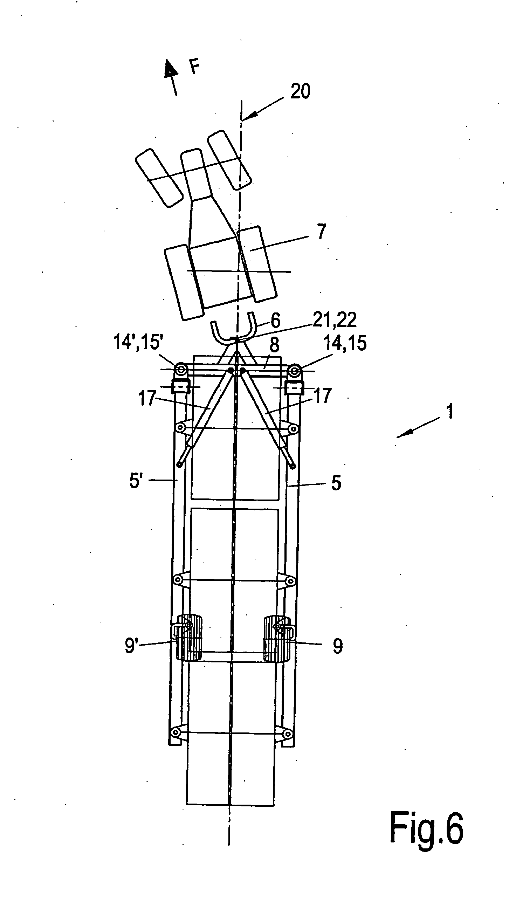

Durch das Verschwenken der Schwenkflügelrahmen 5,5' um die vertikalen Schwenkachsen 15,15' des Vertikalgelenks bzw. Kreuzgelenks 14,14' können diese wahlweise aus der Transportstellung gemäß Fig.6 in die Arbeitsstellung gemäß Fig. 1 verschwenkt werden, wobei die Arbeitsstellung der Schwenkflügelrahmen 5,5' durch einen Öffnungswinkel α definiert ist. Dieser kann festgelegt werden durch eine vorteilhafte Arretierung der Schwenkantriebe 17,17', beispielsweise ausgebildet als doppeltwirkende Hydraulikzylinder. Die Arretierung kann z.B. durch entsperrbare Zwillingsrückschlagventile ausgebildet sein. Damit kann zugleich die Arbeitsbreite A des Kreiselschwaders 1 variiert werden, indem die Schwenkwinkel α und ggf. β,β' variiert werden. Durch die Veränderung der Anstellwinkel β,β' können die Ausleger 10 in ihrer Ausrichtung längs der Fahrtrichtung korrigiert bzw. beibehalten werden, welches zugleich eine Variation der Kreiselabstände X₁,X'₁,X₂,X'₂ untereinander beinhalten kann. Beispielsweise können die Schwenkarme 10 eines Schwenkflügelrahmens 5,5' durch eine Schubstange untereinander gelenkig in an sich bekannter Weise verbunden sein, die von einem nicht dargestellten Stellantrieb, z.B. doppeltwirkender Hydraulikzylinder, betätigt wird, so dass alle Schwenkarme 10 in vorteilhafter Weise gleichzeitig betätigt werden.

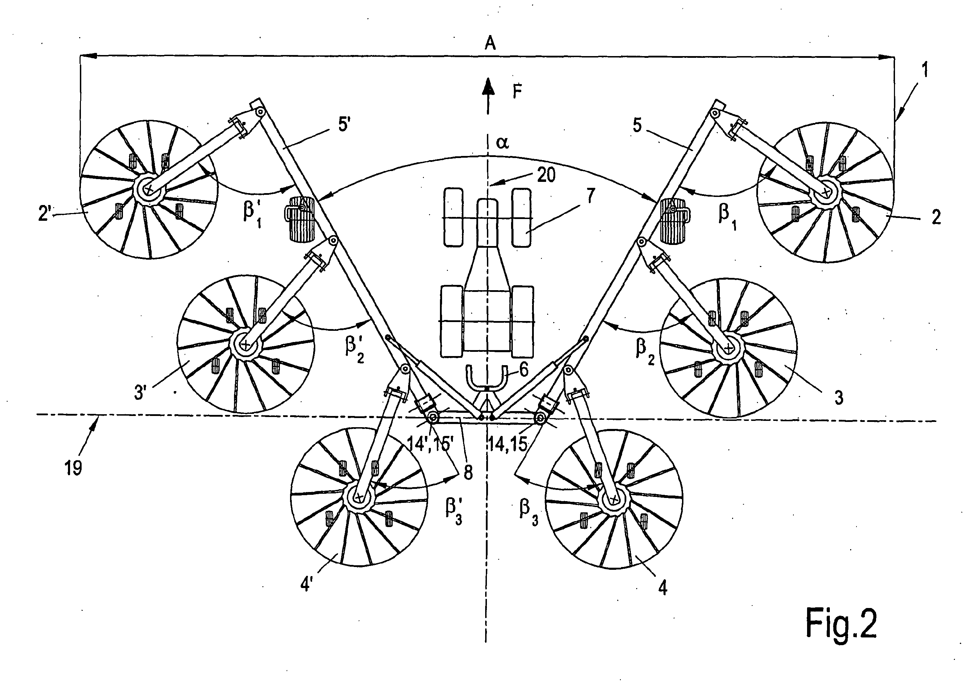

Andererseits ist es aber ebenso möglich, jedem der Schwadkreisel 2,3,4 bzw. 2',3',4' einen separaten Schwenkantrieb, beispielsweise doppelwirkende Hydraulikzylinder, derart zuzuordnen, dass durch ihre Betätigung die Anstellwinkel β1,β1',β2,β2',β3,β3' unabhängig voneinander verstellt werden können, so wie dieses in Fig. 2 dargestellt ist. Fig.2 zeigt den Kreiselschwader 1 gemäß Fig.1, jedoch mit einem kleineren Öffnungswinkel α, der durch die Betätigung der Schwenkantriebe 17,17' gegenüber Fig.1 verändert wurde. Gleichzeitig wurden die Anstellwinkel β₁, β₂, β₃, β₁'β₂'β₃' verändert. Beide Veränderungen, die des Öffnungswinkels α und auch die Veränderung der Anstellwinkel δ,δ' der Schwenkflügelrahmen 5,5' als Einschlusswinkel zwischen der vertikalen Querebene 19 und dem jeweiligen Schwenkflügelrahmen 5,5', und die der Anstellwinkel β₁,β₂,β₃,β₁'β₂'β₃' ermöglichen die gleiche Arbeitsbreite A, wie in Fig.1 dargestellt. Damit können die Sichtverhältnisse auf die Schwadkreisel des Kreiselschwaders 1 individuell an das Trägerfahrzeug 1 und/oder auch individuell auf die Bedürfnisse des Fahrers abgestimmt werden, ohne dabei notwendigerweise die Arbeitsbreite A verändern zu müssen.

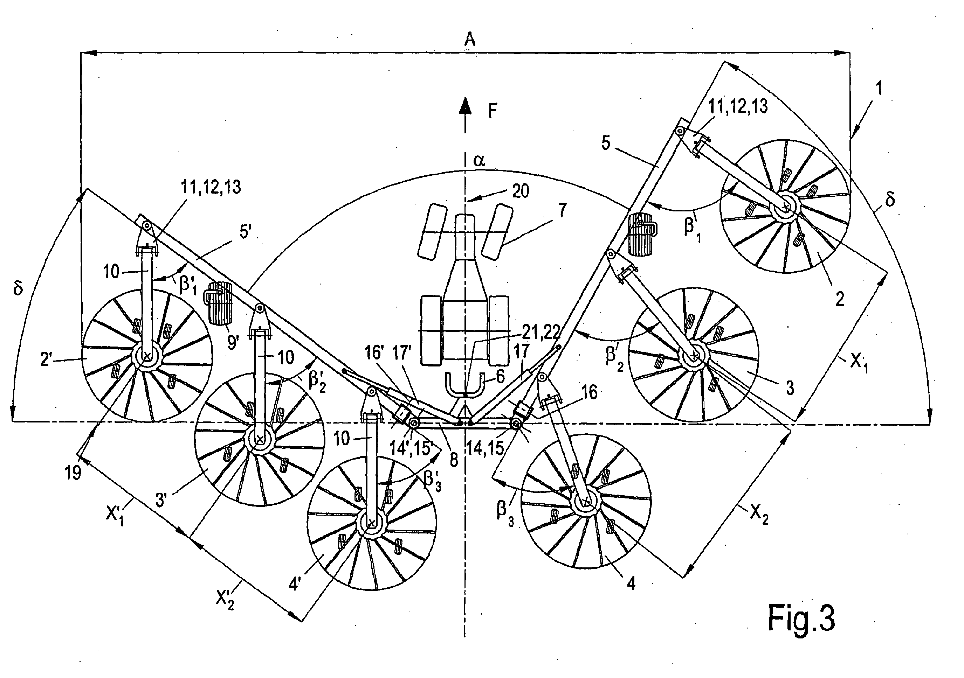

Andererseits kann für sich allein genommen die Variation der Schwenkwinkel δ,δ' bzw. β,β' zur Arbeitsbreitenverstellung und auch zur einseitigen Arbeitsbreitenverstellung A durch Verstellung nur einer Hälfte des Kreiselschwaders 1 genutzt werden. Damit ist es u.a. möglich, jeden der beiden Schwenkflügelrahmen 5 oder 5' einseitig und unabhängig vom jeweils anderen durch Veränderung des Anstellwinkels δ oder δ' zu verschwenken, welches auch eine unsymmetrischen Lage der beiden Schwenkflügelrahmen 5,5' relativ zur vertikalen Längsmittelebene 20 ermöglicht, wie dieses in Fig. 3 dargestellt ist.

Letzteres kann z.B. beim Bearbeiten eines Randstreifens eines Feldes von Vorteil sein, oder beim Ausweichen von Hindernissen wie Bäume oder Grenzpfählen an den Rändern der Arbeitsbreite A des Kreiselschwaders 1, aber ebenso bei Kurvenfahrten, um zu verhindern, dass Erntegut zwischen den Schwadkreiseln liegen bleibt.

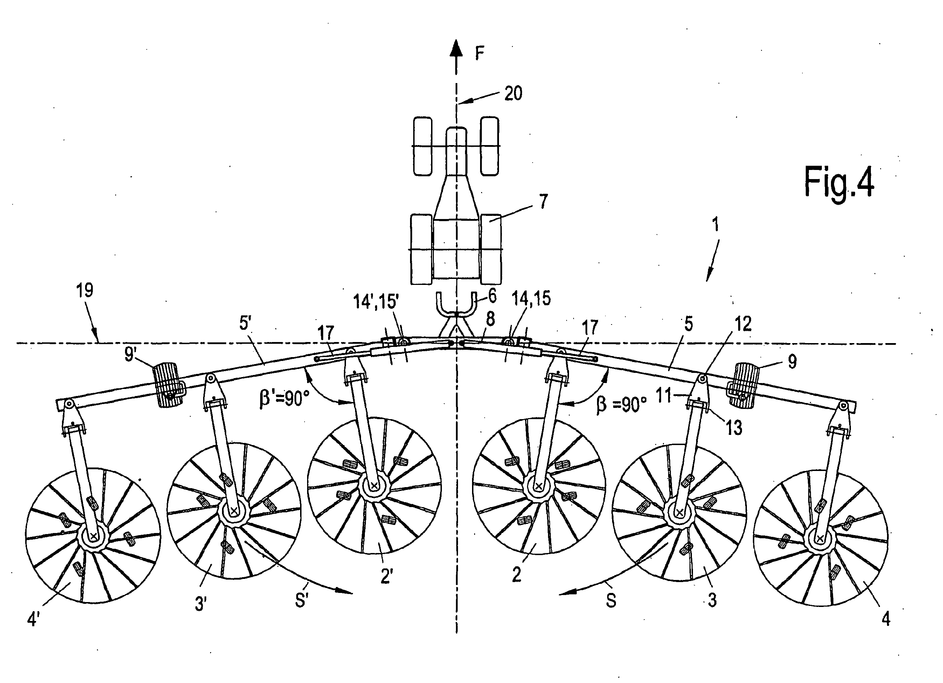

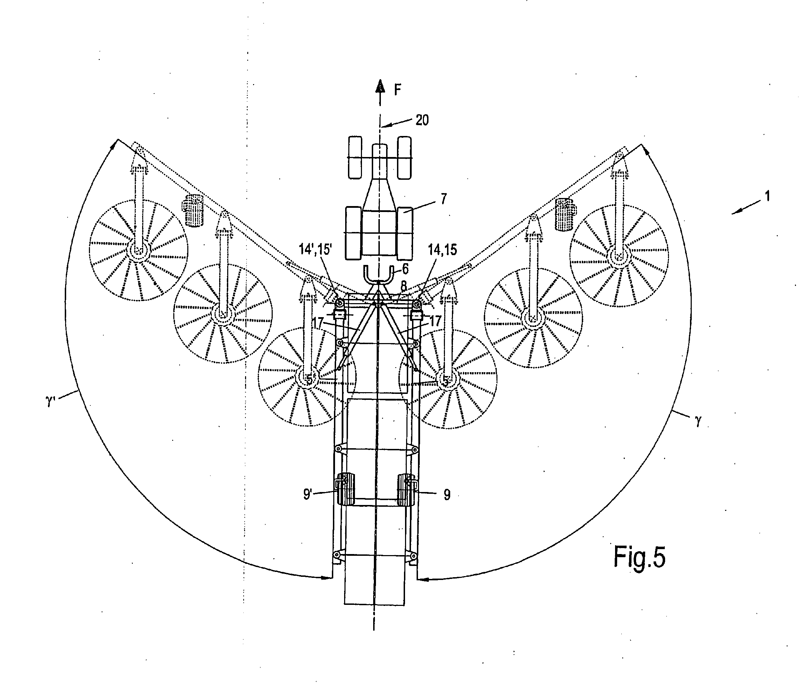

Zur Überführung des Kreiselschwaders 1 in seine Transportstellung gemäß Fig.6 werden beispielsweise zunächst die Ausleger 10 um ihre vertikale Schwenkachse 12 des Klappgelenks 11 in die β=90°- bzw. β'=90°-Stellung verschwenkt, und danach werden die Schwenkflügelrahmen 5,5' entgegen der Fahrtrichtung F um die vertikale Schwenkachse 15,15' des Klappgelenks 14,14' nach hinten in Richtung des Schwenkpfeils mit der Schwenkrichtung S,S' verschwenkt. Eine Momentaufnahme dieser Zwischenstellung zeigt Fig.4. Dabei sollten die Ausleger 10 mit deren Schwadkreisel 2,2',3,3',4,4' rechzeitig vor Erreichen ihrer endgültigen Transportstellung in ihre vertikale Position um die horizontale Schwenkachse 13 des Klappgelenks 11 hochgeschwenkt werden, damit sie den erforderlichen Freiraum für das Erreichen der endgültigen Transportstellung gemäß Fig.6 in vorteilhafter Weise freigeben. Wie aus Fig.5 hervorgeht, überstreichen die Schwenkflügelrahmen 5,5' zu Überführung in ihre Transportstellung einen Schwenkwinkel y,y', der größer als 90° ist und der in vorteilhafter Weise innerhalb des Bereiches von etwa 105° bis 160° liegt, wodurch sich vorteilhafterweise ein variabler Öffnungswinkel α in dem Bereich von ca. 40° bis 150° ergibt. Somit liegen die Schwenkflügelrahmen 5,5' bzw. die Schwadkreisel 2,2',3,3',4,4' erfindungsgemäß in der Arbeitsstellung in Fahrtrichtung F vor der vertikalen Querebene, die definitionsgemäß durch die beiden Gelenkachsen bzw. Schwenkachsen 12 aufgespannt wird bzw. vor den beiden Gelenkachsen 12 und in der Transportstellung entgegen der Fahrtrichtung F hinter den beiden Gelenkachsen 12. In der Transportstellung nehmen die Schwenkflügelrahmen in vorteilhafter Weise einen etwa parallelen Verlauf zueinander ein. Dabei sind die Schwenkflügelrahmen 5,5' in ihrer Ausrichtung und Lage im Wesentlichen zueinander festgelegt.

Vor allem mittels Fig.5 wird deutlich, dass gemäß der Erfindung in der Arbeitsstellung in Fahrtrichtung F betrachtet der in Transportstellung hintere Endabschnitt des verstellbaren bzw. verschwenkbaren Tragrahmens 5 vor dem in Transportstellung vorderen Endabschnitt des verstellbaren bzw. verschwenkbaren Tragrahmens 5 angeordnet ist. Gemäß der in allen Figuren dargestellten Varianten der Erfindung ist in der Transportstellung der verstellbare Tragrahmen 5 in Fahrtrichtung F betrachtet hinter der Drehachse 15 des Tragrahmens 5 und in der Arbeitsstellung der verstellbare Tragrahmen 5 in Fahrtrichtung F betrachtet vor der Drehachse 15 des Tragrahmens 5 angeordnet.

In der Arbeitsstellung verhält sich der Kreiselschwader 1 wie ein angebautes Gerät, indem der Freiheitsgrad der Drehung um die Hochachse 22 des Vertikalgelenks 21 durch eine nicht näher dargelegte Arretiervorrichtung aufgehoben ist. In der Transportstellung hingegen wir diese Arretierung aufgehoben, so dass der Kreiselschwader, abgestützt auf seine Stütz- und Nachlaufräder 9,9' die Nachlaufeigenschaften eines Einachsanhängers besitzt. Dazu ist es zweckmäßig, die Hochachse der Stütz- und Nachlaufräder 9,9' so zu arretieren, dass sie auf Geradeausfahrt festgelegt sind. Prinzipiell ist es aber auch möglich, den Einschlagwinkel der Stütz- und Nachlaufräder 9,9' in Abhängigkeit vom Kurvenradius mit zu steuern, wie dieses bei Kreiselschwadern durchaus bekannt ist.

Besonders vorteilhaft wirkt sich die Platzierung der Stütz- und Laufräder 9,9' an den Schwenkflügelrahmen 5,5' aus, wenn diese in etwa auf der Höhe der Hinterachse des Trägerfahrzeugs angebracht sind, so dass dadurch in der Arbeitsstellung sich ein günstiges Spurverhalten hinsichtlich der Lenkung und der Lenkkräfte einstellt und damit gleichzeitig die Querkräfte, welche auf das Trägerfahrzeug während der Kurvenfahrten einwirken, minimal sind.

Die Schwenkantriebe 17,17' übernehmen mehrere Funktionen, in dem sie die Schwenkflügelrahmen 5,5' in ihrer Arbeits- oder Transportstellung arretieren, den Öffnungswinkel α und damit die Arbeitsbreite A des Kreiselschwaders 1 verstellen und die Schwenkflügelrahmen 5,5' aus der Transportstellung in die Arbeitsstellung und umgekehrt überführen. Letzter Vertellvorgang kann auch durch eine Vorwärts- oder Rückwärtsfahrt des Trägerfahrzeugs unterstützt werden, unter anderem auch, um die Totpunktlage der Schwenkflügelrahmen 5,5' zu überwinden. Die Umschaltung der Hydraulikzylinder kann dabei auch automatisch erfolgen, z.B. durch eine Drehwinkelgeber in Verbindung mit einem Mikroprozessor.

Die gesamte Ansteuerung des Kreiselschwaders 1 kann vorzugsweise von einem Platz, insbesondere aus einer Traktorkabine oder dergleichen, heraus erfolgen, beispielsweise durch eine zentrale Steuereinheit mit ISO-Bus Anbindung an einen Mikroprozessor.

In einer weiteren Ausgestaltung der Erfindung können sämtliche Schwenkachsen 12,13,14,14',15,15'22 mit Winkelkodieren bzw. Drehwinkelsensoren und/oder die Stellantriebe 17,17' oder auch andere Stellantriebe, z.B. zum Verschwenken der Ausleger 10 mit Wegaufnehmer, als Sensoren ausgestattet sein, so dass deren Signale als Eingangssignale, z.B. über einen Datenbus, auf die Eingänge eines Mikroprozessors gelegt werden, so dass der Fahrer z.B. über eine zentrale Steuereinheit innerhalb seiner Fahrerkabine die Möglichkeit hat, den Betriebszustand des Kreiselschwaders 1 in vorteilhafter Weise auf einem Display oder dergleichen visualisiert abzulesen bzw. dadurch alle Stellbewegungen steuern und kontrollieren zu können.

Das Trägerfahrzeug 7, hier ausgeführt als Traktor, lässt sich ohne eine längere, gegebenenfalls auch teleskopierbare Zugdeichesel mit einem aufwendigen Fahrwerk in das Konzept des Kreiselschwaders 1 einbinden, so dass dieses Konzept in der Arbeitsposition näherungsweise die gleichen Fahr- und Lenkeigenschaften aufweist, wie das eines selbstfahrenden Kreiselschwaders und wobei in der Transportstellung die Sichtverhältnisse des Fahrers keinerlei Einschränkungen durch den Kreiselschwader unterliegen.

Prinzipiell ist es auch möglich, dieses erfinderische Konzept auf einen selbstfahrenden Kreiselschwader im Sinne einer selbstfahrenden Arbeitsmaschine zu übertragen.

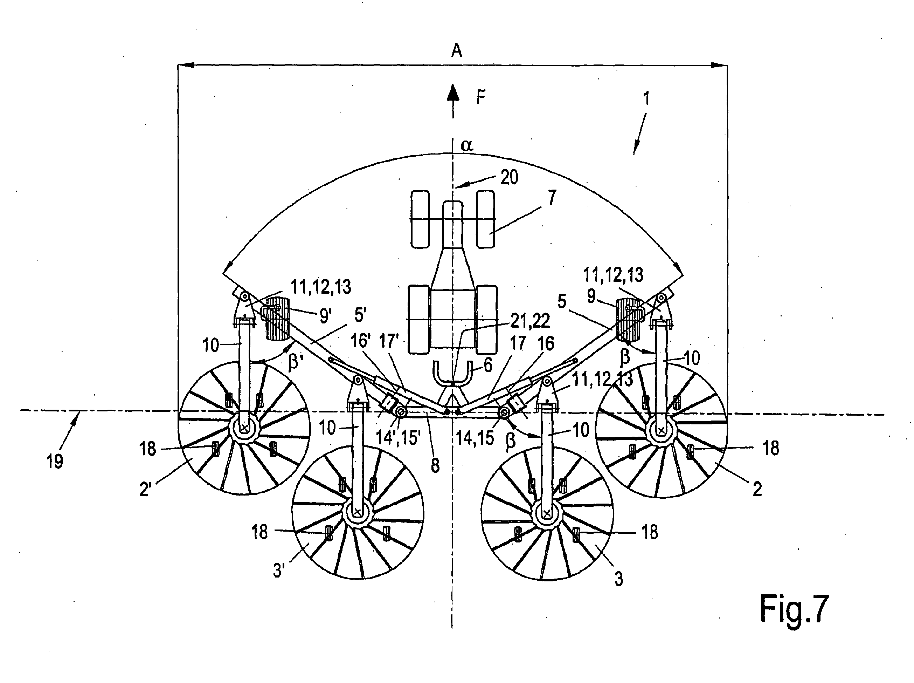

In Figur 7 ist eine zweite Variante des Kreiselschwaders gemäß der Erfindung dargestellt, wobei insgesamt vier Kreiselrechen 2, 2', 3, 3' vorgesehen sind, die in V-förmiger Anordnung an zwei Tragrahmen 5, 5' bzw. Schwenkflügelrahmen 5, 5' angeordnet sind. Entsprechend verkürzt sind die Schwenkflügelrahmen 5, 5' im Vergleich zu den zuvor aufgeführten Schwenkflügelrahmen 5, 5' ausgebildet. Wie bereits in Figur 7 im Vergleich zu den vorgehenden Figuren deutlich wird, können hierbei standardisierte bzw. nahezu identische Komponenten verwendet werden, was insbesondere die Herstellung entsprechender unterschiedlichster Varianten vorteilhaft beeinflusst.

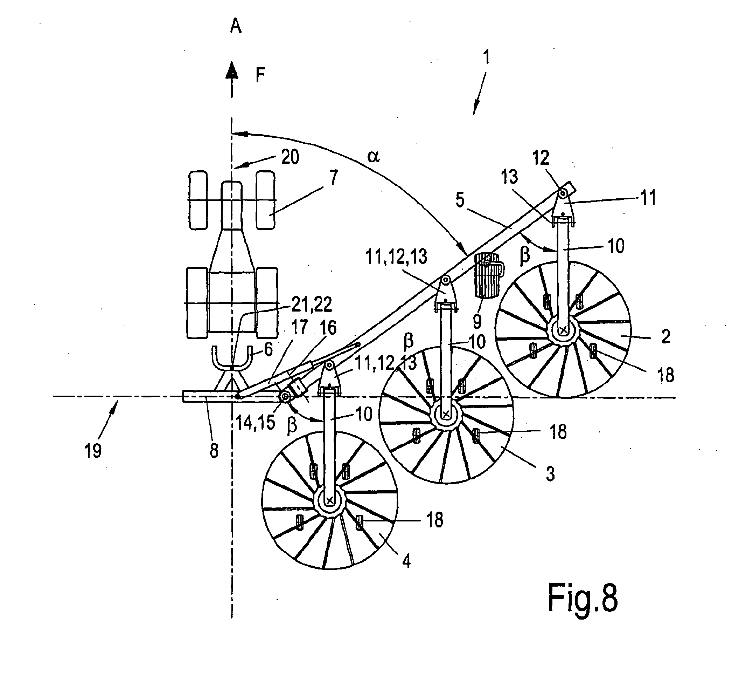

Es können auch einseitige Kreiselschwader 1 gemäß Figur 8 realisiert werden, wobei ebenfalls vergleichbare bzw. identische Komponenten gemäß einer oder mehrerer der vorgenannten Varianten Verwendung findet. Gemäß der Erfindung ist auch ein Zweifach-Kreiselschwader realisierbar, der lediglich einen Schwenkflügelrahmen 5 und zwei Kreiselrechen 2, 3 umfasst.

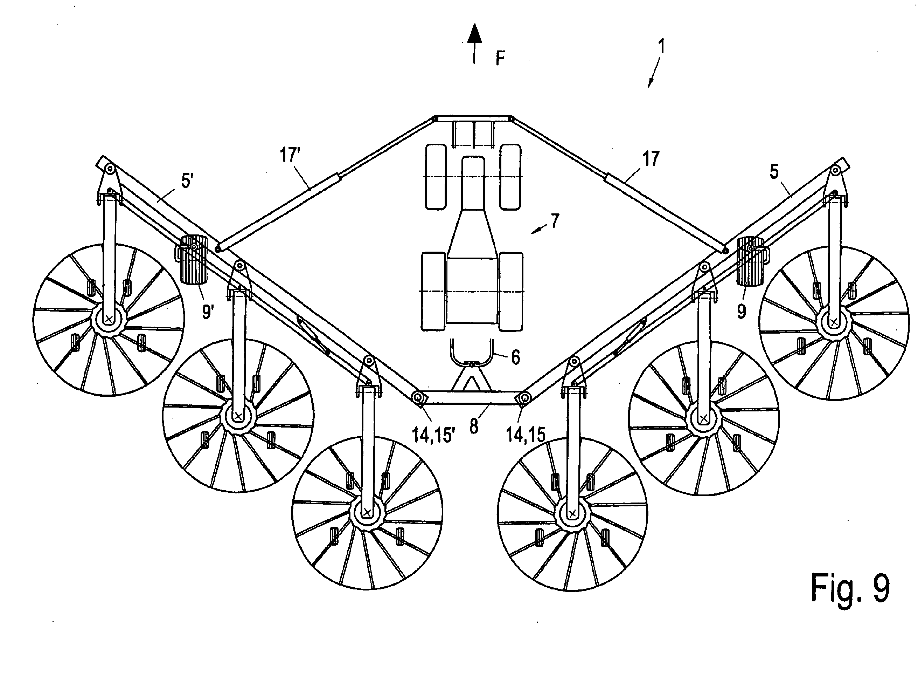

Darüber hinaus ist eine vierte Variante des Kreiselschwaders 1 gemäß der Erfindung realisierbar, wie er beispielhaft in Figur 9 schematisch dargestellt ist. Hierbei weist der Kreiselschwader 1 im Vergleich zu den zuvor genannten Varianten einen Schwenkantrieb 17, 17' der Schwenkflügelrahmen 5, 5' auf, wobei die Schwenkantriebe 17, 17' nicht am Mittelrahmen 8, sondern frontseitig am Trägerfahrzeug bzw. Traktor 7 fixierbar sind. Hierbei kann beispielsweise auf bereits standardmäßig eingesetzte Dreipunktkupplungen bei Traktoren 7 zurückgegriffen werden, um die Fixierung der Schwenkantriebe 17, 17' zu realisieren.

Eine derartige Anordnung der Schwenkantriebe 17, 17' gewährleistet besonders vorteilhafte Hebelverhältnisse während der Arbeitsstellung.

In der Transportstellung wird in vorteilhafter Weise beim Kreiselschwader 1 gemäß Figur 9 die Fixierung der Schwenkantriebe 17, 17' frontseitig am Traktor 7 gelöst, so dass in der Transportstellung des Kreiselschwaders 1 gemäß Figur 9 die Schwenkantriebe 17, 17' vorzugsweise am Mittelrahmen 8 fixierbar sind. Hierbei können die Schwenkflügelrahmen 5, 5' durch die Schwenkantriebe 17, 17' in der Transportstellung vorteilhaft fixiert werden können.

Grundsätzlich können die Anstellwinkel β, β' zur Variation der Arbeitsbreite auch unabhängig voneinander verstellt werden. Vorzugsweise weisen die Klappgelenke 14, 14' Kreuzgelenke auf, die eine aufrechte Gelenkachse 15, 15' und eine horizontale Gelenkachse 16, 16' aufweisen.

Vorteilhafterweise kann auch eine gekröpfte Anordnung der Kreuzgelenke 11, 12, 13 realisiert werden, um eine Ausführungsform mit unter den Schwenkflügelrahmen 5, 5' angeordneten Schwadkreiseln 2, 2', 3, 3', 4, 4' zu realisieren.

Darüber hinaus können auch die Ausleger 10 in Arbeitsstellung in minimaler Auslegerlänge ausgebildet werden, um beispielsweise die Kreiselrechen 2, 2' weiter nach vorne in Fahrtrichtung 11 zu positionieren.

Weiterhin ist eine elektronische Steuerung zur Steuerung der vorzugsweise hydraulischen und/oder elektrischen Stellmittel der Schwenkflügelrahmen 5, 5' und/oder der Ausleger 10 für eine Kurvenfahrt, beispielsweise abhängig vom Lenkeinschlag des Trägerfahrzeugs 7, oder eigens hierfür vorgesehene Sensoren bzw. Aktoren von Vorteil. Fahrtrichtungssensoren könnten beispielsweise u.a. an den Nachlaufrädern 9, 9' angeordnet werden, wenn das Basisfahrzeug 7 eine derartige Information nicht anbietet.

Vorzugsweise sind die Anstellwinkel β zum Verschwenken der Ausleger um deren vertikale Gelenkachse 12 veränderbar, insbesondere unabhängig vom Öffnungswinkel α. Darüber hinaus kann in vorteilhafter Weise die Veränderung der Anstellwinkel β zur Variation der Arbeitsbreite genutzt werden. Entsprechendes kann durch die Längenveränderbarkeit der Ausleger 10 in der Arbeitsstellung realisiert werden. Vorteilhafterweise ist die Längserstreckung der Ausleger 10 in der Arbeitsstellung überwiegend in Fahrtrichtung verlaufend ausgerichtet.

Weiterhin sind die Ausleger 10 zur Überführung in die Transportstellung um ihre horizontale Gelenkachse 13 verschwenkbar. Hierbei kann in vorteilhafter Weise die Längenveränderbarkeit der Ausleger zur Minderung der Transporthöhe eingesetzt werden.

Darüber hinaus ist in vorteilhafter Weise die Kupplungseinrichtung 6 mit dem Mittelrahmen 8 durch ein Vertikalgelenk 21 mit einer Hochachse 22 verbunden. Vorzugsweise ist vorgesehen, dass das Vertikalgelenk 21 und dessen Hochachse 22 wahlweise in der Arbeitsstellung überbrückt und damit arretiert ist, wodurch eine Schwenkbeweglichkeit unterbunden ist und in der Transportstellung aufgehoben werden kann, wodurch die Schwenkmöglichkeit wieder freigegeben ist.

### Bezugszeichenliste

- 1: Kreiselschwader
- 2,2': Schwadkreisel
- 3,3': Schwadkreisel
- 4,4': Schwadkreisel
- 5,5': Schwenkflügelrahmen
- 6: Kupplungseinrichtung
- 7: Trägerfahrzeug, Traktor
- 8: Mittelrahmen
- 9,9': Stütz- und Nachlaufrad
- 10: Ausleger
- 11: Klappgelenk (Kreuzgelenk)
- 12: vertikale Gelenkachse
- 13: horizontale Gelenkachse
- 14,14': Klappgelenk, (Kreuzgelenk)
- 15,15': vertikale Schwenkachse (Hochachse)
- 16,16': horizontale Schwenkachse
- 17,17': Schwenkantrieb
- 18: Kreiselfahrwerk
- 19: vertikale Querebene
- 20: vertikale Längsmittelebene
- 21: Vertikalgelenk
- 22: Hochachse
- A: Arbeitsbreite
- F: Fahrtrichtung
- S,S': Schwenkrichtung
- X₁, X₂: Kreiselabstände
- X'₁,X'₂: Kreiselabstände
- α: Öffnungswinkel
- ß,β',: Anstellwinkel
- β₁, β₂, β₃: Anstellwinkel
- β'₁, β'₂, β'₃: Anstellwinkel
- γ,γ': Schwenkwinkel
- δ, δ': Anstellwinkel

## Patentansprüche

1. Kreiselschwader mit wenigstens einem verstellbaren, insbesondere um eine im Wesentlichen vertikale Drehachse (15) schwenkbaren Tragrahmen (5), so dass der Tragrahmen (5) aus einer Transportstellung, insbesondere um die Drehachse (15) um einen Schwenkwinkel (γ), in eine Arbeitsstellung und umgekehrt verstellbar ist, wobei am Tragrahmen (5) weinigstens zwei, um im Wesentlichen vertikale Achsen umlaufend angetriebene, am Boden durch Laufräder (18) abstützbare Kreiselrechen (2, 3, 4) zum Zusammenrechen von Erntegut angeordnet sind, wobei in der Transportstellung der verstellbare Tragrahmen (5) in Fahrtrichtung (F) betrachtet ein hinterer Endabschnitt und ein vorderer Endabschnitt aufweist, **dadurch gekennzeichnet, dass** in der Arbeitsstellung in Fahrtrichtung (F) betrachtet der hintere Endabschnitt des verstellbaren Tragrahmens (5) vor dem vorderen Endabschnitt des verstellbaren Tragrahmens (5) angeordnet ist und dass in der Transportstellung der verstellbare Tragrahmen (5) in Fahrtrichtung (F) betrachtet hinter der Drehachse (15) des Tragrahmens (5) und dass in der Arbeitsstellung der verstellbare Tragrahmen (5) in Fahrtrichtung (F) betrachtet vor der Drehachse (15) des Tragrahmens (5) angeordnet ist.

2. Kreiselschwader nach Anspruch 1, **dadurch gekennzeichnet, dass** in der Transportstellung die Längsachse des Tragrahmens (5) im Wesentlichen in Fahrtrichtung (F) ausgerichtet ist.

3. Kreiselschwader nach einem der vorgenannten Ansprüche, **dadurch gekennzeichnet, dass** der Schwenkwinkel (γ) im Wesentlichen größer als 90° und kleiner als 170° ist.

4. Kreiselschwader nach einem der vorgenannten Ansprüche, **dadurch gekennzeichnet, dass** in der Arbeitsstellung die Längsachse des Tragrahmens (5) in Bezug zur Fahrtrichtung (F) mit einem Arbeitswinkel (α/2) im Wesentlichen zwischen 10° und 80° ausgerichtet ist.

5. Kreiselschwader nach einem der vorgenannten Ansprüche, **dadurch gekennzeichnet, dass** wenigstens zwei um im Wesentlichen vertikale Drehachsen (15) schwenkbare Tragrahmen (5) vorgesehen sind.

6. Kreiselschwader nach einem der vorgenannten Ansprüche, **dadurch gekennzeichnet, dass** in der Transportstellung die beiden Längsachsen der Tragrahmen (5) im Wesentlichen parallel nebeneinander angeordnet sind.

7. Kreiselschwader nach einem der vorgenannten Ansprüche, **dadurch gekennzeichnet, dass** der/die Tragrahmen (5) an einem quer zur Fahrtrichtung (F) ausgerichteten Querrahmen (8) angeordnet ist/sind.

8. Kreiselschwader nach einem der vorgenannten Ansprüche, **dadurch gekennzeichnet, dass** am Querrahmen (8) wenigstens eine Kupplungsvorrichtung zum Kuppeln des Kreiselschwaders mit einer Zugmaschine angeordnet ist.

9. Kreiselschwader nach einem der vorgenannten Ansprüche, **dadurch gekennzeichnet, dass** wenigstens eine eine Schwenkachse aufweisende Schwenkeinheit zwischen dem Querrahmen und der Kupplungsvorrichtung vorgesehen ist.

10. Kreiselschwader nach einem der vorgenannten Ansprüche, **dadurch gekennzeichnet, dass** wenigstens eine Arretiereinheit zum Arretieren der Schwenkeinheit vorgesehen ist, so dass zumindest in der Arbeitsstellung die Querausrichtung des Querrahmens (8) in Bezug zur Zugmaschine und/oder zur Fahrtrichtung (F) arretiert ist.

11. Kreiselschwader nach einem der vorgenannten Ansprüche, **dadurch gekennzeichnet, dass** wenigstens einer der Schwadkreisel an einem Ausleger mit dem Tragrahmen (5) verbunden ist.

12. Kreiselschwader (1) nach einem der vorgenannten Ansprüche, **dadurch gekennzeichnet, dass** der Ausleger (10) um wenigstens eine Achse drehbar am Tragrahmen (5) angeordnet ist.

13. Kreiselschwader (1) nach einem der vorgenannten Ansprüche, **dadurch gekennzeichnet, dass** der Ausleger (10) als längenveränderbarer Ausleger (10) ausgebildet ist.

14. Kreiselschwader nach einem der vorgenannten Ansprüche, **dadurch gekennzeichnet, dass** in der Arbeitsstellung eine Arbeitsposition einer Bedienperson in Fahrtrichtung (F) betrachtet im Wesentlichen auf Höhe der Achse wenigstens eines der Kreiselrechen (2, 3, 4) angeordnet ist.

15. Kreiselschwader nach einem der vorgenannten Ansprüche, **dadurch gekennzeichnet, dass** in der Arbeitsstellung die Arbeitsposition der Bedienperson in Fahrtrichtung (F) betrachtet hinter der Achse wenigstens eines der Kreiselrechen .(2, 3, 4) angeordnet ist.

16. Kreiselschwader nach einem der vorgenannten Ansprüche, **dadurch gekennzeichnet, dass** wenigstens sechs, um im Wesentlichen vertikale Achsen umlaufend angetriebene, am Boden durch Laufräder abstützbare Kreiselrechen (2, 3, 4) zum Zusammenrechen von Erntegut vorgesehen sind.

17. Kreiselschwader nach einem der vorgenannten Ansprüche, **dadurch gekennzeichnet, dass** der Tragrahmen (5) wenigstens ein Rad (9) zum Verfahren des Kreiselschwaders zumindest in der Transportstellung aufweist.

## Claims

1. Rotary windrower with at least one adjustable support frame (5), which is pivotable in particular about an essentially vertical rotary axis (15), so that the support frame (5) can be adjusted from a transport position, in particular about the rotary axis (15) about a pivot angle (γ), Into a working position and vice versa, whereby on the support frame (5) at least two rotary rakes (2, 3, 4) for raking the harvest are arranged, which are driven about essentially vertical axes and can be supported on the ground by travelling wheels (18), whereby in the transport position the adjustable support frame (5) as viewed in travelling direction (F) comprises a rear end section and a front end section, **characterised in that** as viewed In travelling direction (F) in the operating position the rear end section of the adjustable support frame (5) is arranged in front of the front end section of the adjustable support frame (5), and **in that** in the transport position the adjustable support frame (5) as viewed in travelling direction (F) is arranged behind the rotary axis (15) of the support frame (5), and **In that** in the operating position the adjustable support frame (5) as viewed in travelling direction (F) is arranged in front of the rotary axis (15) of the support frame (5).

2. Rotary windrower according to claim 1, **characterised in that** in the transport position the longitudinal axis of the support frame (5) is aligned essentially In travelling direction (F).

3. Rotary windrower according to one of the preceding claims, **characterised in that** the pivot angle (γ) is essentially greater than 90° and smaller than 170°.

4. Rotary windrower according to one of the preceding claims, **characterised in that** in the operating position the longitudinal axis of the support frame (5) is aligned in relation to the travelling direction (F) with an operating angle (a/2) of essentially between 10° and 80°.

5. Rotary windrower according to one of the preceding claims, **characterised in that** at least two support frames (5) are provided which can be pivoted about essentially vertical rotary axes (15).

6. Rotary windrower according to one of the preceding claims, **characterised in that** In the transport position the two longitudinal axes of the support frame (5) are arranged essentially parallel next to one another.

7. Rotary windrower according to one of the preceding claims, **characterised in that** the support frame(s) (5) is/are arranged on a transverse frame (8) aligned at right angles to the travelling direction (F).

8. Rotary windrower according to one of the preceding claims, **characterised in that** on the transverse frame (8) at least one coupling device is arranged for coupling the rotary windrower with a tractor machine.

9. Rotary windrower according to one of the preceding claims, **characterised In that** at least one pivot unit comprising a pivot axis is provided between the transverse frame and the coupling device.

10. Rotary windrower according to one of the preceding claims, **characterised in that** at least one locking unit for locking the pivot unit is provided, so that at least in the operating position the transverse alignment of the transverse frame (8) is locked relative to the tractor machine and/or to the travelling direction (F).

11. Rotary windrower according to one of the preceding claims, **characterised in that** at least one of the rotary windrowers is connected on a radial arm to the support frame (5).

12. Rotary windrower (1) according to one of the preceding claims, **characterised in that** the radial arm (10) Is arranged to be rotatable about at least one axis on the support frame (5).

13. Rotary windrower (1) according to one of the preceding claims, **characterised in that** the radial arm (10) is designed as a length-adjustable radial arm (10).

14. Rotary windrower according to one of the preceding claims, **characterised in that** In operating position one working position of an operator as viewed In travelling direction (F) is arranged essentially at the height of the axis of at least one of the rotary rakes (2, 3, 4).

15. Rotary windrower according to one of the preceding claims, **characterised in that** in the operating position the working position of the operator as viewed in travelling direction (F) Is arranged behind the axis of at least one of the rotary rakes (2, 3, 4).

16. Rotary windrower according to one of the preceding claims, **characterised in that** at least six rotary rakes (2, 3, 4) for raking the harvest are provided, which are driven about essentially vertical axes and can be supported on the ground by travelling wheels.

17. Rotary windrower according to one of the preceding claims, **characterised in that** the support frame (5) comprises a wheel (9) for traversing the rotary windrower at least in transport position.

## Revendications

1. Andaineur rotatif comportant au moins un cadre porteur réglable (5), notamment pouvant pivoter autour d'un axe de rotation (15) essentiellement vertical, de telle manière que le cadre porteur (5) puisse être déplacé d'une position de transport, en particulier autour de l'axe de rotation (15), selon un angle de pivotement (γ), dans une position de travail et vice versa, au moins deux râteaux circulaires (2, 3, 4) entraînés en rotation autour d'axes essentiellement verticaux et pouvant être reposés au sol par l'intermédiaire de roues mobiles (18) étant agencés sur le cadre porteur (5) afin de ratisser la récolte, le cadre porteur réglable (5) présentant dans la position de transport, vu dans le sens de la marche (F), un segment d'extrémité arrière et un segment d'extrémité avant,
**caractérisé en ce que,** dans la position de travail, vu dans le sens de la marche (F), le segment d'extrémité arrière du cadre porteur réglable (5) est placé devant le segment d'extrémité avant du cadre porteur réglable (5) et **en ce que**, dans la position de transport, le cadre porteur réglable (5), vu dans le sens de la marche (F), est placé derrière l'axe de rotation (15) du cadre porteur (5) et **en ce que**, dans la position de travail, le cadre porteur réglable (5), vu dans le sens de la marche (F), est placé devant l'axe de rotation (15) du cadre porteur (5).

2. Andaineur rotatif selon la revendication 1,
**caractérisé en ce que,** dans la position de transport, l'axe longitudinal du cadre porteur (5) est essentiellement orienté dans le sens de la marche (F).

3. Andaineur rotatif selon l'une des revendications précédentes,
**caractérisé en ce que** l'angle de pivotement (γ) est essentiellement supérieur à 90° et inférieur à 170°.

4. Andaineur rotatif selon l'une des revendications précédentes,
**caractérisé en ce que,** dans la position de travail, l'axe longitudinal du cadre porteur (5) est orienté selon un angle de travail (α/2) essentiellement compris entre 10° et 80° par rapport au sens de la marche (F).

5. Andaineur rotatif selon l'une des revendications précédentes,
**caractérisé en ce qu'**il est prévu au moins deux cadres porteurs (5) pouvant être pivotés autour d'axes de rotation (15) essentiellement verticaux.

6. Andaineur rotatif selon l'une des revendications précédentes,
**caractérisé en ce que**, dans la position de transport, les deux axes longitudinaux des cadres porteurs (5) sont placés l'un à côté de l'autre, essentiellement de manière parallèle.

7. Andaineur rotatif selon l'une des revendications précédentes,
**caractérisé en ce que** le ou les cadres porteurs (5) est ou sont agencé(s) sur un cadre transversal (8) orienté transversalement au sens de la marche (F).

8. Andaineur rotatif selon l'une des revendications précédentes,
**caractérisé en ce qu'**il est agencé sur le cadre transversal (8) au moins un dispositif de couplage destiné à coupler l'andaineur rotatif à une machine de traction.

9. Andaineur rotatif selon l'une des revendications précédentes,
**caractérisé en ce qu'**il est prévu entre le cadre transversal et le dispositif de couplage au moins une unité de pivotement présentant un axe de pivotement.

10. Andaineur rotatif selon l'une des revendications précédentes,
**caractérisé en ce qu'**il est prévu au moins une unité de blocage destinée à bloquer l'unité de pivotement, de telle façon qu'au moins dans la position de travail l'orientation transversale du cadre transversal (8) par rapport à la machine de traction et/ou au sens de la marche (F) soit bloquée.

11. Andaineur rotatif selon l'une des revendications précédentes,
**caractérisé en ce qu'**au moins l'un des rotors d'andaineur est relié au cadre porteur (5) par un bras.

12. Andaineur rotatif (1) selon l'une des revendications précédentes,
**caractérisé en ce que** le bras (10) est agencé sur le cadre porteur (5) de manière à pouvoir tourner autour d'au moins un axe.

13. Andaineur rotatif (1) selon l'une des revendications précédentes,
**caractérisé en ce que** le bras (10) est réalisé sous la forme d'un bras (10) à longueur variable.

14. Andaineur rotatif selon l'une des revendications précédentes,
**caractérisé en ce que,** dans la position de travail, une position de travail d'un opérateur, vu dans le sens de la marche (F), est située essentiellement à hauteur de l'axe d'au moins l'un des râteaux rotatifs (2, 3, 4).

15. Andaineur rotatif selon l'une des revendications précédentes,
**caractérisé en ce que,** dans la position de travail, la position de travail de l'opérateur, vu dans le sens de la marche (F), est située derrière l'axe d'au moins l'un des râteaux rotatifs (2, 3, 4).

16. Andaineur rotatif selon l'une des revendications précédentes,
**caractérisé en ce qu'**il est prévu au moins six râteaux rotatifs (2, 3, 4) entraînés en rotation autour d'axes essentiellement verticaux et pouvant être posés au sol par l'intermédiaire de roues mobiles afin de ratisser la récolte.

17. Andaineur rotatif selon l'une des revendications précédentes,
**caractérisé en ce que** le cadre porteur (5) présente au moins une roue (9) afin d'amener l'andaineur rotatif au moins dans la position de transport.
